(19) Europäisches Patentamt
European Patent Office
Office européen des brevets

(11) **EP 3 740 671 B1**

(12) **EUROPÄISCHE PATENTSCHRIFT**

(45) Veröffentlichungstag und Bekanntmachung des Hinweises auf die Patenterteilung:
**22.09.2021 Patentblatt 2021/38**

(21) Anmeldenummer: **19700589.5**

(22) Anmeldetag: **14.01.2019**

(51) Int Cl.:
***F03D 7/02*** *(2006.01)*

(86) Internationale Anmeldenummer:
**PCT/EP2019/050788**

(87) Internationale Veröffentlichungsnummer:
**WO 2019/138105 (18.07.2019 Gazette 2019/29)**

(54) **WINDENERGIEANLAGE UND VERFAHREN ZUM STEUERN EINER WINDENERGIEANLAGE**

WIND TURBINE AND METHOD FOR CONTROLLING A WIND TURBINE

ÉOLIENNE ET PROCÉDÉ DE COMMANDE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2018 DE 102018100726**

(43) Veröffentlichungstag der Anmeldung:
**25.11.2020 Patentblatt 2020/48**

(73) Patentinhaber: **Wobben Properties GmbH**
**26607 Aurich (DE)**

(72) Erfinder:
• **MESSING, Ralf**
  **26605 Aurich (DE)**
• **KIMILLI, Mustafa Onur**
  **81371 München (DE)**
• **ZIMMERMANN, Frank**
  **26723 Emden (DE)**
• **NITSCHE, Maik**
  **26419 Schortens (DE)**
• **GIESLER, Matthias**
  **26603 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 2 123 906     US-A1- 2014 327 243**

EP 3 740 671 B1

**Beschreibung**

Die vorliegende Erfindung betrifft ein Verfahren zum Steuern einer Windenergieanlage und die vorliegende Erfindung eine entsprechende Windenergieanlage.

Es ist bekannt, dass die Drehung eines aerodynamischen Rotors je nach Rotordrehzahl eine Eigenfrequenz einer Windenergieanlage bzw. eine Eigenfrequenz eines Turms der Windenergieanlage anregen können. Als Abhilfe ist dazu aus dem Stand der Technik bekannt, entsprechende Rotordrehzahlen, die eine solche Eigenfrequenz des Turmes bzw. der Windenergieanlage anregen können, schnell zu durchfahren.

Eine solche Maßnahme setzt eine genaue Kenntnis der entsprechenden Eigenfrequenz bzw. der diese Eigenfrequenz anregenden Drehzahl, die hier als kritische Drehzahl bezeichnet wird, voraus und macht es dann erforderlich, jeweils zwischen einem Betrieb unterhalb dieser kritischen Drehzahl und einem Betrieb oberhalb dieser kritischen Drehzahl zu unterscheiden. Es kommt hinzu, dass besonders beim Durchfahren des kritischen Drehzahlbereichs ein schlechter Wirkungsgrad in Kauf genommen werden muss. Besonders kann es notwendig sein, zum Durchfahren eines solchen kritischen Drehzahlbereichs die Abgabeleistung und damit in dem Moment den Ertrag zu verringern.

Das Deutsche Patent- und Markenamt hat in der Prioritätsanmeldung zur vorliegenden Anmeldung folgenden Stand der Technik recherchiert: US 2009 / 0 292 397 A1, US 2014 / 0 327 243 A1, EP 2 113 659 A2 und WO 2001 / 77 524 A1.

Der vorliegenden Erfindung liegt somit die Aufgabe zugrunde, zumindest eines der genannten Probleme zu adressieren. Insbesondere soll eine Lösung geschaffen werden, bei der eine Schwingungsanregung besonders des Turms der Windenergieanlage durch den Rotor vermieden wird, zumindest zu bisherigen Lösungen verringert werden, bei möglichst hohem Ertrag. Zumindest soll zu bisherigen Lösungen eine alternative Lösung vorgeschlagen werden.

Erfindungsgemäß wird dazu eine Windenergieanlage gemäß Anspruch 1 vorgeschlagen. Eine solche Windenergieanlage weist einen Turm und einen aerodynamischen Rotor auf, der mit einer veränderlichen Rotordrehzahl betreibbar ist. Die Rotordrehzahl kann vereinfachend auch als Drehzahl bezeichnet werden. Der aerodynamische Rotor weist mehrere Rotorblätter auf, die jeweils einen verstellbaren Rotorblatteinstellwinkel aufweisen. Somit können die Rotorblätter in ihrem Anstellwinkel zum Wind verstellt werden.

Außerdem ist ein Generator zum Erzeugen einer elektrischen Ausgangsleistung vorgesehen und der Generator wird durch den aerodynamischen Rotor im Betrieb angetrieben. Vorzugsweise ist eine getriebelose Ausführung vorgesehen, bei der der aerodynamische Rotor unmittelbar mit einem elektrodynamischen Rotor des Generators gekoppelt ist, so dass sich der aerodynamische und der elektrodynamische Rotor mit gleicher Drehzahl drehen.

Zum Betreiben der Windenergieanlage wird eine Betriebskennlinie vorgegeben, die einen Zusammenhang zwischen der Rotordrehzahl und der Ausgangsleistung angibt. Dazu weist die Windenergieanlage eine Steuerung auf, die die Ausgangsleistung entsprechend der Betriebskennlinie in Abhängigkeit der Rotordrehzahl einstellt. Eine solche Steuerung kann als Steuerungsmodul oder beispielsweise als Prozessrechner in der Windenergieanlage vorgesehen sein. Vorzugsweise ist die Betriebskennlinie auch in der Steuerung hinterlegt.

Die Betriebskennlinie weist zudem eine Startdrehzahl auf, auf die die Rotordrehzahl ansteigt, sobald die Windenergieanlage bei ausreichend Windgeschwindigkeit startet. Ist die Windgeschwindigkeit also noch nicht ausreichend, wird die Windenergieanlage nicht betrieben. Wenn die Windenergieanlage nicht betrieben wird, kann sich aber gemäß einer Ausführungsform der Rotor in einem Trudelbetrieb befinden, bei dem sich der Rotor dreht, hierbei ist immer der aerodynamische Rotor gemeint, ohne dass dadurch aber in der Windenergieanlage eine Abgabeleistung erzeugt wird. Ist ausreichend Wind vorhanden, ist die Windgeschwindigkeit also ausreichend hoch, wird die Windenergieanlage mit einer Startdrehzahl gestartet. Ein solcher Start der Windenergieanlage bedeutet, dass diese dann durch eine Betriebsführung geführt wird und dabei mittels des Generators die Ausgangsleistung erzeugt. Besonders befindet sich dann eine Azimutverstellung der Windenergieanlage im Betrieb und besonders werden auch die Rotorblätter in ihrem Rotorblatteinstellwinkel so eingestellt, dass sie möglichst optimal Leistung aus dem Wind entnehmen können.

Dazu wird nun vorgeschlagen, dass in Abhängigkeit einer Turmeigenfrequenz der Windenergieanlage und außerdem oder alternativ in Abhängigkeit eines erfassten Turbulenzmaßes des vorherrschenden Windes die Startdrehzahl festgelegt wird.

Besonders die Wahl der Startdrehzahl in Abhängigkeit der Turmeigenfrequenz schafft die Möglichkeit, die Startdrehzahl so groß zu wählen, dass die Turmeigenfrequenz nicht angeregt wird, indem die Startdrehzahl nämlich so groß gewählt wird, dass sie oberhalb einer Drehzahl liegt, die die Turmeigenfrequenz anregen könnte. Demnach wird vorgeschlagen, einen entsprechenden Drehzahlbereich unterhalb einer solchen die Turmeigenfrequenz anregenden Drehzahl auszusparen.

Dabei ist zu beachten, dass das nicht bedeutet, dass die Windenergieanlage erst bei so starkem Wind startet, bei dem die Rotordrehzahl gemäß einer üblichen Betriebskennlinie oberhalb der die Turmeigenfrequenz anregenden Drehzahl liegt. Vielmehr wird hier im Startbereich vorgeschlagen, bei möglichst gleich schwachem Wind wie bisher zu starten, aber dabei eine höhere Drehzahl zu wählen, als sonst.

Es mag sein, dass dadurch ein geringfügig schlechterer Wirkungsgrad in dem konkreten Betriebspunkt dieser höheren Startdrehzahl erreicht wird. Das kann aber durch den insgesamt verbesserten Betrieb aufgewogen werden. Selbst wenn sich dadurch die Startwindgeschwindigkeit, bei der gestartet werden kann, geringfügig erhöht, kann sich in der Gesamtwirkung dennoch ein erhöhter Ertrag einstellen. Besonders kann das ungünstige Durchfahren eines kritischen Drehzahlbereichs, der nämlich die Turmeigenfrequenz anregen kann, vermieden werden.

Es wurde auch erkannt, dass nicht nur durch eine genaue Anregung der Turmeigenfrequenz eine Turmbelastung auftreten kann, sondern dass auch konkrete Windbedingungen solche Turmbelastungen verstärken können. Beispielsweise kann ein vergleichsweise langsam drehender aerodynamischer Rotor durch die kontinuierlichen Blattdurchgänge am Turm eine solche Blattdurchgangsfrequenz aufweisen, dass dies zu einer Turmbelastung führen kann. Ist der Wind nun im Wesentlichen gleichmäßig und stationär, kann eventuell eine solche Belastung hinnehmbar sein. Es wurde aber erkannt, dass durch eine hohe Turbulenz des Windes, also besonders eine hohe Böigkeit des Windes, die Belastung noch verstärkt werden kann. Dazu wurde nun erkannt, dass ein Erhöhen der Startdrehzahl die Gesamtbelastung verringern kann.

Besonders bevorzugt wird die Startdrehzahl in Abhängigkeit der Turmeigenfrequenz und in Abhängigkeit eines erfassten Turbulenzmaßes festgelegt. So kann die Startdrehzahl über die kritische Drehzahl angehoben werden. Hier ist unter der kritischen Drehzahl grundsätzlich die die Eigenfrequenz des Turmes anregende Drehzahl gemeint. Je nachdem, wie turbulent der Wind ist, also besonders wie böig er ist, kann die Startdrehzahl zusätzlich noch weiter angehoben werden, um einen größeren Abstand zur kritischen Drehzahl zu erreichen. Besonders wird hier vorgeschlagen, dass die Startdrehzahl umso weiter oberhalb der kritischen Drehzahl liegt, je turbulenter der Wind ist.

Vorzugsweise wird vorgeschlagen, dass als Turbulenzmaß eine Turbulenzintensität betrachtet wird.

Die Turbulenz des Windes lässt sich beschreiben durch die Turbulenzintensität TI:

$$TI = \frac{\sigma_u}{\overline{U}}. \qquad \text{[Gl. 1]}$$

Die Standardabweichung $\sigma_u$ ist definiert wie folgt:

$$\sigma_u = \sqrt{\frac{1}{T}\int_0^T (u - \overline{U})^2 dt}, \qquad \text{[Gl. 2]}$$

mit der über den Zeitraum *T* gemittelten Windgeschwindigkeit $\overline{U}$:

$$\overline{U} = \frac{1}{T}\int_0^T u\, dt. \qquad \text{[Gl. 3]}$$

Um instationäre Strömungen u zu beschreiben wird üblicherweise die gemittelte Geschwindigkeit von der Fluktuation ũ überlagert:

$$u = \overline{U} + \tilde{u} \qquad \text{[Gl. 4]}$$

Die Turbulenzintensität gibt somit die Standardabweichung der Windgeschwindigkeit in Bezug auf die über einen längeren Zeitraum, beispielsweise 10 Minuten, gemittelte Windgeschwindigkeit wieder. Dadurch wird ein Maß angegeben, wie stark die überlagerte Fluktuation in Bezug auf die Windgeschwindigkeit ist. Diese Turbulenzintensität ist insoweit auch ein Maß für die Stärke der Schwankungen des Windes, die eine zusätzliche Belastung der Windenergieanlage darstellen können. Dazu wurde erkannt, dass im Bereich der kritischen Drehzahl bereits eine Entlastung im Falle turbulenten Windes erreicht werden kann, wenn die Drehzahl in einem etwas größeren Abstand zur kritischen Drehzahl liegt. Durch die Vorgabe einer entsprechend hohen Startdrehzahl wird erreicht, dass der gesamte Betrieb der Windenergieanlage oberhalb dieser kritischen Drehzahl liegt, und zwar mit entsprechend ausreichendem Abstand. Durch die Betrachtung der Turbulenzintensität kann aber vermieden werden, den Abstand der Drehzahl zur kritischen Drehzahl unnötig groß zu wählen.

Gemäß einer Ausführungsform wird vorgeschlagen, dass der Startdrehzahl über die Betriebskennlinie eine Startausgangsleistung zugeordnet ist. Dazu wird dann vorgeschlagen, dass beim Starten der Windenergieanlage zunächst die Startausgangsleistung eingestellt wird, bis sich die Windgeschwindigkeit weiter erhöht. Das kann besonders so durchgeführt werden, dass die Windgeschwindigkeit erfasst wird und vorbestimmt wird, bei welcher Windgeschwindigkeit sich ein solcher Betriebspunkt mit der Startdrehzahl und der Startausgangsleistung bei entsprechendem Rotorblatteinstellwinkel ergibt. Liegt diese Windgeschwindigkeit dann vor, kann die Windenergieanlage gestartet werden und die Anlage kann direkt auf diesen vorbestimmten Betriebspunkt hochfahren.

Gemäß einer Ausgestaltung wird somit auch vorgeschlagen, dass eine Startwindgeschwindigkeit oder ein Startdrehmoment festgelegt wird und bei Ansteigen der Windgeschwindigkeit auf die Startwindgeschwindigkeit bzw. bei Ansteigen eines Rotordrehmomentes auf das Startdrehmoment die Windenergieanlage startet, mit der Rotordrehzahl auf die Startdrehzahl ansteigt und die Startausgangsleistung eingestellt wird.

Vorzugsweise wird die Startdrehzahl dadurch festgelegt, dass die Betriebskennlinie entsprechend festgelegt wird. Die Startdrehzahl befindet sich im Grunde am Anfang der Betriebskennlinie. Die Betriebskennlinie weist also, anschaulich gesprochen, einige Betriebspunkte auf, die jeweils als Wertepaare von Ausgangsleistung und Rotordrehzahl definiert sind. Einer davon ist der Betriebspunkt, der durch die Startdrehzahl als Rotordrehzahl und eine Ausgangsleistung definiert ist, insbesondere die Startausgangsleistung. Wird dann also eine Startdrehzahl festgelegt oder verändert, wird ein entsprechender Betriebspunkt auf der Betriebskennlinie vorgegeben und damit die Betriebskennlinie festgelegt bzw. verändert.

Statt die Betriebskennlinie festzulegen, also beispielsweise Punkt für Punkt oder über Eckdaten vorzugeben, kommt auch in Betracht, mehrere vorbestimmte Betriebskennlinien zu hinterlegen und aus diesen mehreren vorbestimmten Betriebskennlinien dann die Betriebskennlinie auszuwählen, die die gewünschte Startdrehzahl aufweist. Gegebenenfalls kann hier zwischen zwei Betriebskennlinien interpoliert werden, wenn die gewünschte Startdrehzahl nicht genau auf einer der vorbestimmten Betriebskennlinien liegt.

Vorzugsweise ist das Turbulenzmaß ein Maß dafür, wie turbulent der vorherrschende Wind ist, wobei das Turbulenzmaß umso größer ist, umso turbulenter der Wind ist. Dazu wird außerdem vorgeschlagen, dass die Startdrehzahl umso größer gewählt wird, also umso größer festgelegt wird, je größer das Turbulenzmaß ist. Insbesondere die bereits erläuterte Turbulenzintensität ist ein solches Turbulenzmaß, das umso größer ist, je turbulenter der vorherrschende Wind ist. Gemäß diesem Vorschlag, mit größerem Turbulenzmaß die Startdrehzahl größer zu wählen, wird damit ein umso größerer Abstand zur kritischen Drehzahl erreicht, je turbulenter der Wind ist. Damit kann auf einfache Art und Weise über das Festlegen der Startdrehzahl sowohl eine kritische Drehzahl vermieden werden, gleichzeitig auch eine zu hohe Belastung durch eine Rotordrehzahl in der Nähe der kritischen Drehzahl vermieden werden.

Vorzugsweise wird somit auch vorgeschlagen, dass die Startdrehzahl so gewählt wird, dass sie über einer Rotordrehzahl liegt, die die Turmeigenfrequenz anregt. Die Vorzüge dieses Vorschlags wurden schon erläutert, insbesondere kann hierdurch von vornherein erreicht werden, dass die Rotordrehzahl grundsätzlich nur oberhalb einer Drehzahl liegt, die die Turmeigenfrequenz anregt und damit können Vorgänge zum Durchsteuern einer kritischen Drehzahl vermieden werden.

Insbesondere wird die Startdrehzahl so gewählt, dass ihre zugehörige Blattdurchgangsfrequenz oberhalb der Turmeigenfrequenz liegt. Insbesondere wird vorgeschlagen, dass ihre Blattdurchgangsfrequenz wenigstens 5% oberhalb der Turmeigenfrequenz liegt. Durch Auswahl dieser 5% als Mindestabstand kann eine Anregung der Turmeigenfrequenz vermieden werden bei gleichzeitig kaum zu erwartenden Ertragseinbußen.

Dabei ist die Blattdurchgangsfrequenz die Frequenz, mit der die Rotorblätter vor dem Turm durchlaufen. Dreht sich also beispielsweise der Rotor mit einer Drehzahl von 6 Umdrehungen pro Minute, dreht sich der Rotor also in 10 Sekunden einmal. In diesen 10 Sekunden passieren bei einem Rotor mit 3 Rotorblättern aber alle Rotorblätter einmal den Turm, so dass die Blattdurchgangsfrequenz nicht 0,1 Hertz beträgt, sondern 0,3 Hertz. Somit wird vorgeschlagen, speziell diese Blattdurchgangsfrequenz zu berücksichtigen und eine Startdrehzahl so zu wählen, dass diese Blattdurchgangsfrequenz oberhalb der Turmeigenfrequenz liegt. Damit kann auf einfache Weise, wenn die Turmeigenfrequenz bekannt ist, ein sicherer Wert für die Startdrehzahl gefunden werden und dann entsprechend eingestellt werden.

Gemäß einer Ausführungsform wird vorgeschlagen, dass der Startdrehzahl ein Startrotorblatteinstellwinkel zugeordnet ist. Es wurde somit erkannt, dass eine veränderte Startdrehzahl zu aerodynamischen Veränderungen führen kann, im Vergleich zu einer anderen Startdrehzahl bei derselben Windgeschwindigkeit. Dazu wird vorgeschlagen, dies durch einen angepassten Startrotorblatteinstellwinkel zu berücksichtigen. Dadurch können gute aerodynamische Verhältnisse bei diesen durch die veränderte Startdrehzahl veränderten aerodynamischen Bedingungen geschaffen werden.

Insbesondere wird vorgeschlagen, dass der Startrotorblatteinstellwinkel umso größer gewählt wird, je größer die Startdrehzahl gewählt wird. Hierzu wird besonders vorgeschlagen, dass mit jeder Veränderung der Startdrehzahl auch der Startrotorblatteinstellwinkel verändert wird, nämlich insbesondere verändert vorgegeben wird. Besonders wird hier vorgeschlagen, einen Startbetriebspunkt festzulegen, der definiert ist durch die Startdrehzahl, die Startausgangsleistung und den Startrotorblatteinstellwinkel. Damit können optimale Startbedingungen geschaffen werden, die eine Vermeidung der kritischen Drehzahl erreichen können, eine zu starke Belastung durch Turbulenzen in der Nähe der kritischen Drehzahl vermeiden können und gleichzeitig einen möglichst hohen Ertrag schaffen können.

Besonders kann durch einen solchen vergrößerten Startrotorblatteinstellwinkel die sogenannte axiale Induktion, also die Abbremsung der Luft in der Rotorkreisfläche, wieder verringert werden, um dadurch die Induktion durch Anhebung der Startdrehzahl zumindest teilweise wieder zu kompensieren. Je nach Rotorblattauslegung kann die erhöhte Induktion zu einer ineffizienteren Leistungsumsetzung am Rotorblatt durch die Erhöhung der Startrotordrehzahl führen. Wenn zum Beispiel das Rotorblatt vor der Erhöhung der Startdrehzahl beim Betz'schen Optimum für die axiale Induktion bei 1/3 betrieben wurde, dann führt die erhöhte Startdrehzahl dazu, dass die Induktion über einen Wert von 1/3 angehoben wird und damit aus dem Optimum heraus wandert. Die Vergrößerung des Startrotorblatteinstellwinkels führt dann dazu, dass die Induktion wieder abnimmt und sich wieder hin zum Optimum bewegt.

Gemäß einer Ausgestaltung wird vorgeschlagen, dass in Abhängigkeit der Startdrehzahl eine sich bei der Startdrehzahl einstellende Schnelllaufzahl gewählt wird. Die Windenergieanlage wird bei einer bestimmten Windgeschwindigkeit gestartet und startet dann auf die vorgesehene Startdrehzahl. Hierfür wird vorgeschlagen, für die dann vorliegende aerodynamische Situation eine Schnelllaufzahl zu wählen. Die Schnelllaufzahl ist das Verhältnis der Umfangsgeschwindigkeit des aerodynamischen Rotors, also an seinen Blattspitzen, bezogen auf die vorherrschende Windgeschwindigkeit. Die Schnelllaufzahl ist eine wichtige Kenngröße für die aerodynamische Situation und somit wird vorgeschlagen, diese über eine vorteilhafte Wahl der Schnelllaufzahl einzustellen oder zumindest günstig zu beeinflussen.

Ist die Startdrehzahl vorgegeben, kann die Schnelllaufzahl darüber eingestellt werden, bei welchem Wind diese Startdrehzahl vorgesehen ist. Es kommt aber auch in Betracht, die Schnelllaufzahl unter anderem durch die Startdrehzahl zu beeinflussen. Beispielsweise kommt in Betracht, dass für die Startdrehzahl ein Drehzahlbereich in Abhängigkeit der Turmeigenfrequenz und/oder des erfassten Turbulenzmaßes ausgewählt wird. Dann kann innerhalb dieses Bereichs noch eine weitere Einstellung vorgenommen werden, über die die Schnelllaufzahl eingestellt werden kann.

Vorzugsweise wird die Schnelllaufzahl außerdem oder zusätzlich in Abhängigkeit eines Startrotorblatteinstellwinkels gewählt. Dadurch kann eine geeignete Schnelllaufzahl zusätzlich an den eingestellten Rotorblatteinstellwinkel angepasst werden, um dadurch eine besonders gute aerodynamische Situation auch bei den so veränderten Startbedingungen zu schaffen.

Vorzugsweise wird die Schnelllaufzahl umso größer gewählt, je größer die Startdrehzahl gewählt wird. Außerdem oder alternativ wird sie umso größer gewählt, je größer der Startrotorblatteinstellwinkel gewählt wird. Hier wurde besonders erkannt, dass bei einer hohen Anfangsdrehzahl und/oder einem großen anfänglichen Rotorblatteinstellwinkel eine hohe Schnelllaufzahl zu gutem aerodynamischen Betrieb führen kann.

Gemäß einer Ausgestaltung wird vorgeschlagen, dass die Betriebsdrehzahl im laufenden Betrieb und außerdem oder alternativ in einem Trudelbetrieb in Abhängigkeit des Turbulenzmaßes angepasst wird, um dadurch die Startdrehzahl einzustellen.

Hierbei wurde erkannt, dass das Einstellen einer Startdrehzahl nicht nur den Startvorgang betrifft, sondern auch den Fall, wenn die Windenergieanlage aufgrund von Abflauen des Windes wieder angehalten wird. Dabei wurde besonders erkannt, dass sich die Windeigenschaften, besonders ein Turbulenzmaß, also besonders eine Turbulenzintensität, seit dem letzten Startvorgang und damit seit der zuletzt gewählten Startdrehzahl geändert haben kann.

Die Windenergieanlage kann dabei im laufenden Betrieb häufig selbst gut solche geänderten Bedingungen erkennen. Insbesondere kann sie dies durch Auswerten von Rotordrehzahl, der erzeugten elektrischen Ausgangsleistung und dem eingestellten Rotorblatteinstellwinkel erkennen. Wird dann dabei erkannt, dass sich die Windbedingungen von denen unterscheiden, bei denen zuletzt gestartet wurde, kann auch die Startdrehzahl an diese geänderten Bedingungen angepasst werden.

Eine Variante ist, dazu eine entsprechende Betriebskennlinienwahl durchzuführen. Wird im laufenden Betrieb die Betriebskennlinie verändert, kommt in Betracht, einen solchen Übergang nicht sprunghaft, sondern über eine Übergangsfunktion zu steuern. Es kommt auch in Betracht, nur einen Kennlinienabschnitt der Betriebskennlinie zu verändern, nämlich einen, der sehr nahe an der Startdrehzahl liegt, und auf dem in dem Moment die Windenergieanlage nicht betrieben wird. Mit anderen Worten kann ein unterhalb des aktuellen Betriebspunktes liegender Abschnitt der Betriebskennlinie im laufenden Betrieb praktisch ohne weiteres geändert werden, da er in dem Moment keine Wirkung hat. Fällt dann der aktuelle Betriebspunkt auf diesen veränderten Kennlinienbereich ab, kann dieser veränderte Kennlinienbereich den Betriebspunkt dann in Richtung zur so veränderten Startdrehzahl führen.

Es kommt auch in Betracht, die Betriebsdrehzahl im laufenden Betrieb anzupassen. Dadurch kann die Windturbine auf einen nahenden Abfall auf die Startdrehzahl vorbereitet werden. Auch die Startdrehzahl kann dabei verändert werden.

Die Betriebsdrehzahl und/oder Betriebskennlinie in einem Trudelbetrieb anzupassen hat besonders den Vorteil, dass in einem solchen Trudelbetrieb bereits Informationen über die Windsituation vorliegen und dadurch berücksichtigt werden können.

Vorzugsweise wird somit auch vorgeschlagen, das Turbulenzmaß aus einem Betriebsverhalten der Windenergieanlage zu erfassen. Dabei kann besonders in Abhängigkeit der mittleren Drehzahl, dem mittleren Drehmoment bzw. der mittleren Ausgangsleistung und dem eingestellten Rotorblatteinstellwinkel auf eine mittlere Windgeschwindigkeit geschlossen werden. Besonders aus Schwankungen der Drehzahl und der Ausgangsleistung kann auf die Fluktuation geschlossen werden, die der Durchschnittswindgeschwindigkeit, also der gemittelten Windgeschwindigkeit, überlagert ist. Daraus kann dann in der vorstehend beschriebenen Weise, besonders gemäß der Gleichung Gl.1, die Turbulenzintensität bestimmt werden.

Erfindungsgemäß wird auch ein Verfahren nach Anspruch 11 vorgeschlagen. Dieses Verfahren zum Steuern einer Windenergieanlage verwendet eine Windenergieanlage, die einen Turm und einen aerodynamischen Rotor aufweist, wobei der aerodynamische Rotor mit einer veränderlichen Rotordrehzahl betreibbar ist und mehrere Rotorblätter aufweist, die jeweils mit einem verstellbaren Rotorblatteinstellwinkel versehen sind, die also in ihrem Rotorblatteinstellwinkel einstellbar sind. Die Windenergieanlage weist auch einen Generator zum Erzeugen einer elektrischen Ausgangsleistung auf.

Gemäß dem Verfahren wird vorgeschlagen, die Windenergieanlage unter Verwendung einer vorgegebenen Betriebskennlinie zu betreiben. Diese Betriebskennlinie gibt einen Zusammenhang zwischen der Rotordrehzahl und der Ausgangsleistung an. Weiterhin wird vorgeschlagen, die Ausgangsleistung entsprechend der Betriebskennlinie in Abhängigkeit der Rotordrehzahl einzustellen. Dabei ist vorgesehen, dass die Betriebskennlinie eine Startdrehzahl aufweist, auf die die Rotordrehzahl ansteigt, sobald die Windenergieanlage bei ausreichend Windgeschwindigkeit startet. Gemäß dem Verfahren wird also vorgeschlagen, eine solche Betriebskennlinie zu verwenden oder zu erstellen. Dabei wird die Startdrehzahl in Abhängigkeit einer Turmeigenfrequenz der Windenergieanlage festgelegt. Außerdem oder alternativ wird vorgeschlagen, dass die Startdrehzahl in Abhängigkeit eines erfassten Turbulenzmaßes des vorherrschenden Windes, insbesondere in Abhängigkeit einer Turbulenzintensität, festgelegt wird.

Insbesondere wird vorgeschlagen, dass ein solches Verfahren so arbeitet, wie gemäß einer vorstehend beschriebenen Ausführungsform einer Windenergieanlage erläutert wurde.

Vorzugsweise verwendet ein solches Verfahren eine Windenergieanlage gemäß wenigstens einer vorstehend beschriebenen Ausführungsform.

Nachfolgend wird die Erfindung anhand von Ausführungsformen beispielhaft unter Bezugnahme auf die begleitenden Figuren näher erläutert.

Figur 1    zeigt eine Windenergieanlage in einer schematischen Darstellung.

Figur 2    zeigt verschiedene Betriebskennlinien mit unterschiedlichen Startdrehzahlen.

Figur 3    zeigt verschiedene windgeschwindigkeitsabhängige Drehzahlverläufe und zugeordnete Blatteinstellwinkel.

Figur 4    zeigt ein schematisches Ablaufdiagramm einer Windenergieanlagensteuerung bzw. eines entsprechenden Verfahrens.

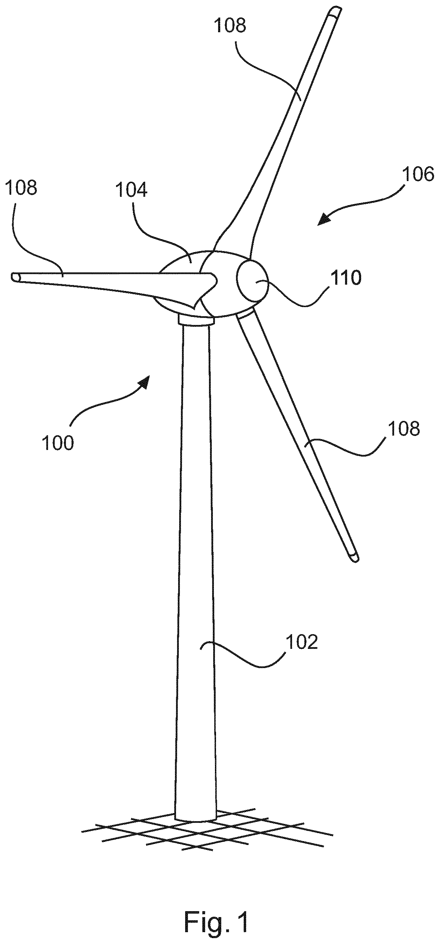

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

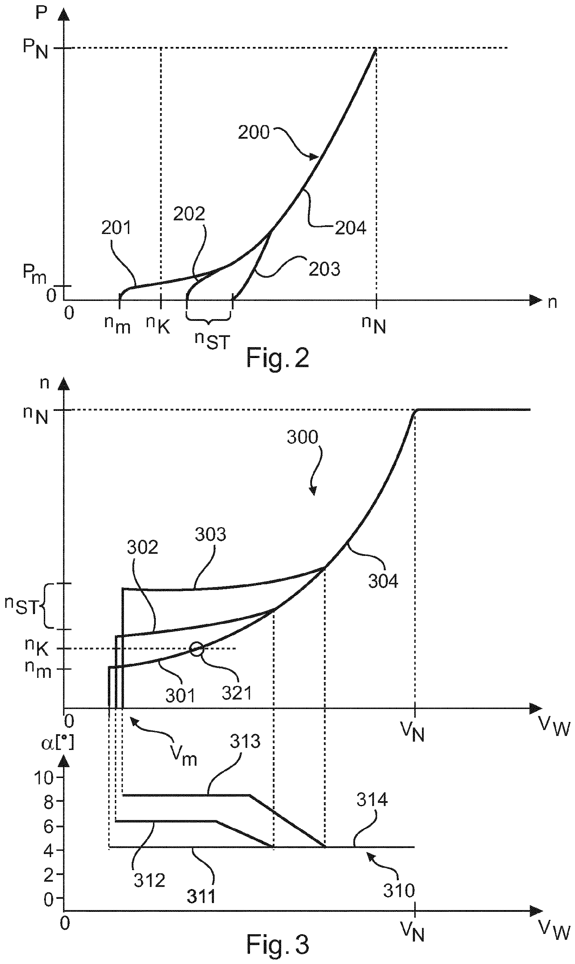

Figur 2 zeigt eine Betriebskennlinie 200, die eine Leistung P in Abhängigkeit der Drehzahl n zeigt. Die Leistung P ist in dem Diagramm auf Nennleistung $P_N$ normiert und die Drehzahl n ist auf ihre Nenndrehzahl $n_N$ normiert.

Außerdem ist in dem Diagramm der Figur 2 eine kritische Drehzahl $n_K$ eingezeichnet. Diese kritische Drehzahl $n_K$ ist eine Drehzahl, die eine Turmeigenfrequenz anregen würde. Beispielsweise kann diese kritische Drehzahl $n_K$ diejenige Drehzahl sein, bei der sich für eine Windenergieanlage mit drei Rotorblättern, wie sie in Figur 1 gezeigt ist, eine Blattdurchgangsfrequenz entsprechend der Eigenfrequenz des Turms der Windenergieanlage einstellt.

Die Betriebskennlinie 200 weist in der Figur 2 drei Variationen auf, die entsprechend zu drei unterschiedlichen Kennlinienabschnitten 201 bis 203 führen. Der erste Kennlinienabschnitt 201 zeigt dabei eine Variation, bei der die kritische Drehzahl $n_K$ nicht vermieden wird. Bei diesem ersten Kennlinienabschnitt 201 startet somit die Windenergieanlage bei der minimalen Drehzahl $n_m$, die insoweit eine Startdrehzahl darstellt. Es ist zu erkennen, dass gemäß dieser Betriebskennlinie mit dem ersten Kennlinienabschnitt 201 die Drehzahl beim Starten diesen Wert der minimalen Drehzahl $n_m$ aufweist, wobei die Leistung anfangs, wenn der Wind also noch schwach ist, zunächst auf die Mindestleistung $P_m$ ansteigt. Das ist die Leistung, die wenigstens sinnvollerweise von der Windenergieanlage bzw. von ihrem Generator erzeugt werden muss, damit ein Starten der Windenergieanlage überhaupt sinnvoll ist.

Bei steigender Windgeschwindigkeit wird sich dann auch die Drehzahl und damit auch die Leistung erhöhen, wobei dann die kritische Drehzahl $n_K$ zwischenzeitlich erreicht wird. Dann kann eine Anregung der Eigenfrequenz des Turmes der Windenergieanlage auftreten, die zu einer großen Belastung der Windenergieanlage führen kann.

Um das zu vermeiden, wird vorgeschlagen, eine Startdrehzahl $n_{ST}$ zu wählen, die oberhalb der kritischen Drehzahl $n_K$ liegt. Durch diese Lösung braucht also die kritische Drehzahl $n_K$ nicht durchsteuert zu werden, was manche andere Verfahren vorschlagen, sondern es wird gleich mit einer höheren Drehzahl gestartet.

Dazu sind zwei Möglichkeiten in Figur 2 veranschaulicht. Gemäß dem zweiten Kennlinienabschnitt 202 wird dabei eine Lösung vorgeschlagen, bei der die Startdrehzahl $n_{ST}$ nur geringfügig höher als die kritische Drehzahl $n_K$ liegt.

Aber auch gemäß diesem zweiten Kennlinienabschnitt 202, der ebenfalls Teil der Betriebskennlinie 200 ist, startet die Windenergieanlage im Wesentlichen mit der minimalen Leistung $P_m$. Es wird dazu im Wesentlichen lediglich eine andere Startdrehzahl gewählt, die nämlich höher als die minimale Drehzahl $n_m$ ist. Erhöht sich dann die Windgeschwindigkeit, so erhöht sich dort auch die Drehzahl und dabei bewegt sich der Betriebspunkt, der hier durch den jeweiligen Leistungswert und Drehzahlwert bestimmt ist, zu dem Hauptabschnitt 204 der Betriebskennlinie 200, in dem die drei Kennlinienabschnitte 201 bis 203 vereint sind.

Zusätzlich wird nun vorgeschlagen, dass auch noch berücksichtigt werden kann, wie hoch die Turbulenz des Windes ist. Dazu wird besonders eine Turbulenzintensität berechnet und ist diese hoch, wird vorgeschlagen, einen noch weiteren Abstand der Startdrehzahl $n_{ST}$ zu der kritischen Drehzahl $n_K$ zu wählen, als dies bei dem zweiten Kennlinienabschnitt 202 der Fall ist. Entsprechend wird bei hoher Turbulenzintensität der dritte Kennlinienabschnitt 203 vorgeschlagen. Auch bei diesem startet die Windenergieanlage zunächst auf einen Leistungswert etwa in der Höhe der Minimalleistung $P_m$. Erhöht sich die Windgeschwindigkeit weiter, so wird auch hier der Betriebspunkt zum Hauptabschnitt 204 der Betriebskennlinie 200 geführt. Der dritte Kennlinienabschnitt 203 schafft somit einen größeren Abstand zur kritischen Drehzahl und kann dadurch zusätzliche Belastungen bedingt durch eine hohe Turbulenzintensität vermeiden.

Figur 3 weist ein kombiniertes Diagramm auf, nämlich die Darstellung eines Drehzahlverlaufs n in Abhängigkeit einer Windgeschwindigkeit Vw. Der untere Bereich dieses Diagramms zeigt dazu zugeordnete Blatteinstellwinkel a.

Figur 3 zeigt somit im oberen Abschnitt eine Drehzahlkennlinie 300, die im Grunde der Betriebskennlinie 200 der Figur 2 zugeordnet ist, wobei natürlich zu beachten ist, dass die Darstellungen schematischer Natur sind. Entsprechend weist auch diese Drehzahlkennlinie 300 einen ersten bis dritten Kennlinienabschnitt 301 bis 303 auf, die dem Grunde nach zu dem ersten bis dritten Kennlinienabschnitt 201 bis 203 der Figur 2 gehören bzw. diesen in gleicher Reihenfolge zugeordnet werden können. Auch die Drehzahlkennlinie 300 weist einen Hauptabschnitt 304 auf, in dem die Drehzahlkennlinie 300 für alle drei Varianten dann gleich ist.

Im Übrigen ist auch hier die Windgeschwindigkeit Vw auf Nennwindgeschwindigkeit $V_N$ normiert und die Drehzahl n ist auf ihre Nenndrehzahl $n_N$ normiert. Die in dem unteren Abschnitt dargestellten Blatteinstellwinkel sind beispielhaft mit Winkelgraden angegeben, die auch andere Werte aufweisen können.

Der erste Kennlinienabschnitt 301 startet somit bei einer geringen Windgeschwindigkeit $V_m$ und wird dann auf die Minimaldrehzahl $n_m$ angehoben bzw. die Anlagensteuerung lässt den Wind den Rotor auf diese Drehzahl hochdrehen. Steigt dann die Windgeschwindigkeit weiter an, steigt auch die Drehzahl weiter an, bis sie den Hauptabschnitt 304 der Drehzahlkennlinie 300 erreicht hat. Sie muss dabei die kritische Drehzahl $n_K$ durchlaufen, was zu unerwünschten Belastungen führen kann. Diesen ersten Kennlinienabschnitt 301 der Drehzahlkennlinie ist ein erster Kennlinienabschnitt 311 eines Blatteinstellwinkelverlaufs 310 zugeordnet. Dieser zeigt, dass der zu dem ersten Kennlinienabschnitt 301 der Drehzahlkennlinie 300 zugeordnete Blatteinstellwinkel über die gesamte betrachtete Windgeschwindigkeit konstant bleibt. Das ist dort exemplarisch mit einem Rotorblatteinstellwinkel von 4 Grad eingezeichnet.

Gemäß einem zweiten Kennlinienabschnitt 302 der Drehzahlkennlinie 300 wird vorgeschlagen, bei Erreichen der Mindestwindgeschwindigkeit $V_m$ die Drehzahl sofort auf eine Startdrehzahl $n_{ST}$ zu erhöhen. Diese Startdrehzahl $n_{ST}$ des zweiten Kennlinienabschnitts 302 liegt oberhalb der kritischen Drehzahl $n_K$. Auch der zweite Kennlinienabschnitt 302 kreuzt zwar die kritische Drehzahl $n_K$, weist dabei aber keinen stationären Betriebspunkt mit dieser kritischen Drehzahl $n_K$ auf. Insoweit unterscheidet sich das von dem ersten Kennlinienabschnitt 301, der einen kritischen Betriebspunkt 321 aufweist, der einen stationären Betriebspunkt bildet. In diesem stationären Betriebspunkt, nämlich dem kritischen Betriebspunkt 321, wird eine Turmeigenfrequenz angeregt, was zu einer unerwünschten Belastung führt.

Dem zweiten Kennlinienabschnitt 302 ist ein Blatteinstellwinkel gemäß dem zweiten Kennlinienabschnitt 312 des Blatteinstellwinkelverlaufs 310 zugeordnet, der anfangs, also bei kleinen Windgeschwindigkeiten Vw einen größeren Wert als der Hauptabschnitt 314 des Blatteinstellwinkelverlaufs 310 aufweist. Dieser Winkel des zweiten Kennlinienabschnitts 312 ist hier exemplarisch zunächst mit 6 Grad angegeben. Mit zunehmender Windgeschwindigkeit bleibt dieser Blatteinstellwinkel zunächst konstant und fällt dann aber auf den Wert des Hauptabschnitts 314 ab. An der Stelle erreicht dann auch der zweite Kennlinienabschnitt 302 der Drehzahlkennlinie 300 den Hauptabschnitt 304 der Drehzahlkennlinie 300.

Ganz ähnlich verhält es sich auch für den dritten Kennlinienabschnitt 303 der Drehzahlkennlinie 300, der bei Erreichen der minimalen Windgeschwindigkeit $V_m$ eine noch höhere Startdrehzahl $n_{ST}$ erreicht und damit einen noch größeren Abstand zur kritischen Drehzahl $n_K$ ebenfalls gleich zu Beginn einnimmt. Auch der dritte Kennlinienabschnitt 303 kreuzt die kritische Drehzahl $n_K$, weist dort aber keinen stationären Betriebspunkt auf. Auch der dritte Kennlinienabschnitt 303 der Drehzahlkennlinie 300 nähert sich mit steigender Windgeschwindigkeit Vw dann dem Hauptabschnitt 304 der Drehzahlkennlinie 300 an. Dort wo er diesen Hauptabschnitt 304 erreicht, weist er dann auch denselben Rotorblatteinstellwinkel auf, wie der Hauptabschnitt 314 des Blatteinstellwinkelverlaufs 310. Davor ist aber ein dritter Kennlinienabschnitt 313 des Blatteinstellwinkelverlaufs 310 zu sehen, der dem dritten Kennlinienabschnitt 303 der Drehzahlkennlinie 300 zugeordnet ist und dort einen noch größeren Blatteinstellwinkel zeigt, der exemplarisch mit dem Wert von etwa 8 Grad angegeben ist.

Die Figur 3 soll besonders verdeutlichen, dass eine deutlich höher gewählte Startdrehzahl $n_{ST}$, wie sie auch in der Figur 2 gezeigt ist, nicht bedeutet, dass die Windenergieanlage bezogen auf die Windgeschwindigkeit später startet, sondern nur dass sie anders startet. Es kommen zwar leichte Unterschiede bei der minimalen Windgeschwindigkeit $V_m$ in Betracht, bei denen diese unterschiedlichen Kennlinien starten, diese Unterschiede sind aber klein und daher ist in Figur 3 auch nur eine minimale Windgeschwindigkeit $V_m$ eingezeichnet.

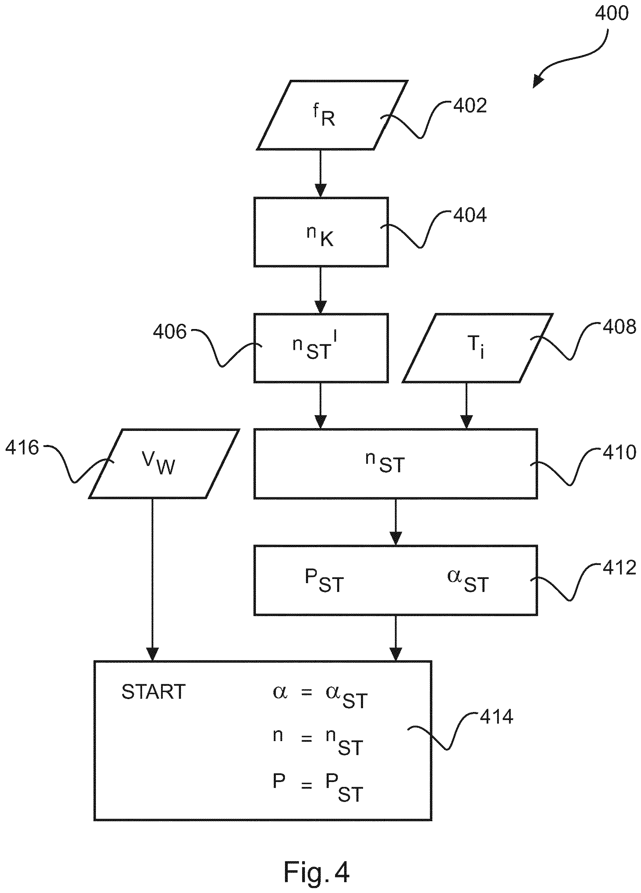

Figur 4 zeigt nun ein Ablaufdiagramm, demnach dieser Ablaufplan 400 mit dem Identifikationsblock 402 startet. In dem Identifikationsblock 402 wird zunächst die Resonanzfrequenz $f_R$ erfasst oder identifiziert. Das kann dadurch erfolgen, dass diese Resonanzfrequenz aufgrund der Kenntnis der Windenergieanlage ermittelt wird. Das kann auch bedeuten, dass sie entwicklungsseitig bereits vorgegeben und in einem Prozessrechner implementiert ist. Insoweit ist der Ablaufplan 400 auch als Steuerung zu verstehen, in der der erläuterte Ablaufplan implementiert ist. In dieser Steuerung kann auch herstellerseitig diese Resonanzfrequenz $f_R$ hinterlegt sein und dadurch eine Eingangsgröße in diesem Ablaufplan 400 bilden.

Jedenfalls wird aus dieser Resonanzfrequenz bzw. Eigenfrequenz des Turms der Windenergieanlage die kritische Drehzahl $n_K$ in dem Berechnungsblock 404 berechnet. Als eine Berechnung dafür kommt in Betracht, dass davon ausgegangen wird, dass die kritische Drehzahl $n_K$ der Drehzahl entspricht, die eine Blattdurchgangsfrequenz aufweist, die der Eigenfrequenz bzw. Resonanzfrequenz $f_R$ entspricht.

Basierend auf dieser kritischen Drehzahl $n_K$ wird dann im vereinfachten Startdrehzahlblock 406 eine Startdrehzahl $n_{ST'}$ berechnet. Das kann beispielsweise dadurch erfolgen, dass sie auf einen Wert um 5% über der kritischen Drehzahl $n_K$ eingestellt wird. Vorzugsweise wird sie auf einen Wert im Bereich von 5 bis 25% oberhalb der kritischen Drehzahl $n_K$ eingestellt.

Dann wird vorgeschlagen, zusätzlich ein Turbulenzmaß zu erfassen. Dafür ermittelt der Turbulenzintensitätsblock 408 eine Turbulenzintensität. Das kann beispielsweise basierend auf Windgeschwindigkeitsmessungen erfolgen. Deshalb ist auch der Turbulenzintensitätsblock 408 als Eingabeblock gekennzeichnet. Aus diesen beiden Werten, nämlich der vereinfachten Startdrehzahl $n_{ST'}$ und der Turbulenzintensität $T_i$ wird dann im vollständigen Startdrehzahlblock 410 die Startdrehzahl $n_{ST}$ bestimmt.

Die so bestimmte Startdrehzahl $n_{ST}$ wird dann in den Startarbeitspunktblock 412 eingeben. In dem Startarbeitspunktblock 412 wird aus der Startdrehzahl $n_{ST}$ die Startleistung $P_{ST}$ und der Startrotorblatteinstellwinkel $\alpha_{ST}$ bestimmt. Diese drei Werte, also die Startdrehzahl $n_{ST}$, die Startleistung $P_{ST}$ und der Startrotorblatteinstellwinkel $\alpha_{ST}$ definieren dann den einzustellenden Betriebspunkt. Dieser Betriebspunkt, also die drei genannten Werte, wird in den Startblock 414 gegeben. Gestartet wird aber erst, wenn eine ausreichend große Windgeschwindigkeit Vw vorhanden ist. Diese wird mit dem Windblock 416 bestimmt und in den Startblock 414 eingegeben. Alternativ wird vorgeschlagen, dass statt der Erfassung der Windgeschwindigkeit ein Drehmoment zu Grunde gelegt wird und erst dann gestartet wird, wenn, bedingt durch den Wind, ein vorbestimmtes Startdrehmoment vorhanden ist. Für diese Alternative kann der Windblock 416 dann als Startdrehmomentblock ausgebildet sein.

Grundsätzlich ist dieser Ablaufplan 400 eine schematische Darstellung und sämtliche erläuterten Blöcke können auch zusammengefasst sein oder teilweise zusammengefasst sein, besonders in einer entsprechenden Software auf einem Prozessrechner. Besonders hingewiesen werden soll aber darauf, dass sich besonders der Turbulenzintensitätsblock 408 und der Windblock 416 dieselben Daten teilen können. Beispielsweise kann der Windblock 416 die Windgeschwindigkeitsdaten beispielsweise durch einen entsprechenden Sensor aufnehmen und diese zum einen in den Startblock 414 geben, zum anderen aber auch zur Auswertung dem Turbulenzintensitätsblock 408 übergeben.

Jedenfalls erfolgt dann gemäß dem Startblock 414 ein Start der Windenergieanlage, wenn die Windgeschwindigkeit, die der Windblock 416 übergeben hat, ausreichend hoch ist. Alternativ kann auch hier ein Drehmoment betrachtet werden und mit einem vorbestimmten Startdrehmoment verglichen werden. Dann wird die Windenergieanlage gestartet und das bedeutet besonders, dass zunächst der Rotorblatteinstellwinkel $\alpha$ auf den Startrotorblatteinstellwinkel $\alpha_{ST}$ gesetzt wird. Außerdem wird die Rotordrehzahl n auf die Startdrehzahl $n_{ST}$ gesetzt und außerdem kann die Ausgangsleistung P auf die Startausgangsleistung $P_{ST}$ gesetzt werden. Das sind besondere Startbedingungen, die in dem Startarbeitspunktblock 412 bestimmt wurden.

Wenn sich die Windgeschwindigkeit weiter erhöht, können dann aber die Werte angepasst werden. Das kann besonders so erfolgen, wie durch entsprechende Kennlinien vorgegeben ist, nämlich besonders durch eine Drehzahlkennlinie wie in Figur 2 gezeigt und einem Blatteinstellwinkelverlauf wie im unteren Bereich der Figur 3 gezeigt. Die Drehzahlkennlinie 300 der Figur 3 dient im Wesentlichen der Veranschaulichung, bildet aber keine die Windenergieanlage steuernde Kennlinie. Die Startwindgeschwindigkeit, die dort als minimale Windgeschwindigkeit $V_m$ eingetragen ist, kann aber vorzugsweise in dem Startblock 414 Berücksichtigung finden.

### Bezugszeichenliste

Windenergieanlage 100
Turm 102
Gondel 104
Rotor 106
Rotorblättern 108
Spinner 110
Leistung P / Ausgangsleistung P
Nennleistung $P_N$
Mindestleistung $P_m$
Startleistung $P_{ST}$ / Startausgangsleistung $P_{ST}$
Drehzahl n / Drehzahlverlauf n / Rotordrehzahl n
Startdrehzahl $n_{ST}$
Nenndrehzahl $n_N$
kritische Drehzahl $n_K$
minimale Drehzahl / Minimaldrehzahl $n_m$
Betriebskennlinie 200
erster Kennlinienabschnitt 201
zweiter Kennlinienabschnitt 202
dritter Kennlinienabschnitt 203

Hauptabschnitt 204
Windgeschwindigkeit Vw
Nennwindgeschwindigkeit $V_N$
geringe Windgeschwindigkeit / Mindestwindgeschwindigkeit $V_m$
Blatteinstellwinkel $\alpha$
Startrotorblatteinstellwinkel $\alpha_{ST}$
Drehzahlkennlinie 300
erster Kennlinienabschnitt 301
zweiter Kennlinienabschnitt 302
dritter Kennlinienabschnitt 303
Hauptabschnitt 304
Blatteinstellwinkelverlauf 310
erster Kennlinienabschnitt 311
zweiter Kennlinienabschnitt 312
dritter Kennlinienabschnitt 313
Hauptabschnitt 314
kritischen Betriebspunkt 321
Ablaufplan 400
Identifikationsblock 402
Resonanzfrequenz $f_R$
Berechnungsblock 404
vereinfachter Startdrehzahlblock 406
vereinfachte Startdrehzahl $n_{ST'}$
Turbulenzintensitätsblock 408
Turbulenzintensität $T_i$
vollständiger Startdrehzahlblock 410
Startarbeitspunktblock 412
Startblock 414
Windblock 416

**Patentansprüche**

1. Windenergieanlage (100) mit

   - einem Turm (102),
   - einem aerodynamischen Rotor (106), wobei der aerodynamische Rotor (106)
   - mit einer veränderlichen Rotordrehzahl (n) betreibbar ist und
   - mehrere Rotorblätter (108) jeweils mit einem verstellbaren Rotorblatteinstellwinkel aufweist,
   - einem Generator (Gen) zum Erzeugen einer elektrischen Ausgangsleistung, wobei
   - zum Betreiben der Windenergieanlage (100) eine Betriebskennlinie vorgegeben wird, die einen Zusammenhang zwischen der Rotordrehzahl (n) und der Ausgangsleistung (P) angibt und
   - eine Steuerung vorgesehen ist, die die Ausgangsleistung (P) entsprechend der Betriebskennlinie in Abhängigkeit der Rotordrehzahl (n) einstellt, wobei
   - die Betriebskennlinie eine Startdrehzahl aufweist, auf die die Rotordrehzahl ansteigt, sobald die Windenergieanlage bei ausreichend Windgeschwindigkeit startet, und wobei die Startdrehzahl

   - in Abhängigkeit einer Turmeigenfrequenz der Windenergieanlage und/oder
   - in Abhängigkeit eines erfassten Turbulenzmaßes des vorherrschenden Windes festgelegt wird.

2. Windenergieanlage nach Anspruch 1, **dadurch gekennzeichnet, dass**

   - als Turbulenzmaß eine Turbulenzintensität betrachtet wird.

3. Windenergieanlage nach Anspruch 1 oder 2, **dadurch gekennzeichnet, dass**

   - der Startdrehzahl über die Betriebskennlinie eine Startausgangsleistung zugeordnet ist und
   - beim Starten der Windenergieanlage zunächst die Startausgangsleistung eingestellt wird, bis sich die Windgeschwindigkeit weiter erhöht.

4. Windenergieanlage nach einem der vorstehenden Ansprüche, **dadurch gekennzeichnet, dass**

   - eine Startwindgeschwindigkeit oder ein Startdrehmoment festgelegt wird und
   - bei Ansteigen der Windgeschwindigkeit auf die Startwindgeschwindigkeit bzw. bei Ansteigen eines Rotordrehmomentes auf das Startdrehmoment die Windenergieanlage startet,
   - mit der Rotordrehzahl auf die Startdrehzahl ansteigt und
   - die Startausgangsleistung einstellt.

5. Windenergieanlage nach einem der vorstehenden Ansprüche, **dadurch gekennzeichnet, dass**

   - die Startdrehzahl dadurch festgelegt wird, dass die Betriebskennlinie festgelegt oder aus mehreren vorbestimmten Betriebskennlinien ausgewählt wird.

6. Windenergieanlage nach einem der vorstehenden Ansprüche, **dadurch gekennzeichnet, dass**

   - das Turbulenzmaß ein Maß dafür ist, wie turbulent der vorherrschende Wind ist, wobei das Turbulenzmaß umso größer ist, je turbulenter der Wind ist, und
   - die Startdrehzahl umso größer gewählt wird, je größer das Turbulenzmaß ist.

7. Windenergieanlage nach einem der vorstehenden Ansprüche,

**dadurch gekennzeichnet, dass**

- die Startdrehzahl so gewählt wird, dass sie über einer Rotordrehzahl liegt, die die Turmeigenfrequenz anregt, insbesondere, dass
- die Startdrehzahl so gewählt wird, dass ihre zugehörige Blattdurchgangsfrequenz oberhalb der Turmeigenfrequenz liegt, insbesondere so, dass ihre Blattdurchgangsfrequenz wenigstens 5% oberhalb der Turmeigenfrequenz liegt, insbesondere im Bereich von 5% bis 25%.

8. Windenergieanlage nach einem der vorstehenden Ansprüche,
**dadurch gekennzeichnet, dass**

- der Startdrehzahl ein Startrotorblatteinstellwinkel zugeordnet ist und insbesondere
- der Startrotorblatteinstellwinkel umso größer gewählt wird, je größer die Startdrehzahl gewählt wird.

9. Windenergieanlage nach einem der vorstehenden Ansprüche,
**dadurch gekennzeichnet, dass**

- in Abhängigkeit der Startdrehzahl und/oder in Abhängigkeit eines Startrotorblatteinstellwinkels eine sich bei der Startdrehzahl einstellende Schnelllaufzahl gewählt wird und insbesondere
- die Schnelllaufzahl umso größer gewählt wird, je größer die Startdrehzahl gewählt wird und/oder je größer der Startrotorblatteinstellwinkel gewählt wird.

10. Windenergieanlage nach einem der vorstehenden Ansprüche,
**dadurch gekennzeichnet, dass**

- die Betriebsdrehzahl und/oder Betriebskennlinie im laufenden Betrieb und/oder in einem Trudelbetrieb in Abhängigkeit des Turbulenzmaßes angepasst wird, um dadurch die Startdrehzahl einzustellen, und/oder
- das Turbulenzmaß aus einem Betriebsverhalten der Windenergieanlage erfasst wird.

11. Verfahren zum Steuern einer Windenergieanlage (100), die

- einen Turm (102) und,
- einen aerodynamischen Rotor (106) aufweist, wobei der aerodynamische Rotor (106)
- mit einer veränderlichen Rotordrehzahl (n) betreibbar ist und
- mehrere Rotorblätter (108) jeweils mit einem verstellbaren Rotorblatteinstellwinkel aufweist, und die Windenergieanlage

- einen Generator (Gen) zum Erzeugen einer elektrischen Ausgangsleistung, aufweist, umfassend die Schritte
- Betreiben der Windenergieanlage (100) unter Verwendung einer vorgegebenen Betriebskennlinie, die einen Zusammenhang zwischen der Rotordrehzahl (n) und der Ausgangsleistung (P) angibt und
- Einstellen der Ausgangsleistung (P) entsprechend der Betriebskennlinie in Abhängigkeit der Rotordrehzahl (n), wobei
- die Betriebskennlinie eine Startdrehzahl aufweist, auf die die Rotordrehzahl ansteigt, sobald die Windenergieanlage bei ausreichend Windgeschwindigkeit startet, und wobei die Startdrehzahl
- in Abhängigkeit einer Turmeigenfrequenz der Windenergieanlage und/oder
- in Abhängigkeit eines erfassten Turbulenzmaßes des vorherrschenden Windes, insbesondere in Abhängigkeit einer Turbulenzintensität, festgelegt wird.

12. Verfahren nach Anspruch 11,
**dadurch gekennzeichnet, dass**

- eine Startwindgeschwindigkeit festgelegt wird und
- bei Ansteigen der Windgeschwindigkeit auf die Startwindgeschwindigkeit die Windenergieanlage gestartet wird,
- die Rotordrehzahl auf die Startdrehzahl erhöht wird und
- die Startausgangsleistung eingestellt wird.

13. Verfahren nach Anspruch 11 oder 12,
**dadurch gekennzeichnet, dass**

- das Turbulenzmaß ein Maß dafür ist, wie turbulent der vorherrschende Wind ist, wobei das Turbulenzmaß umso größer ist, je turbulenter der Wind ist, und
- die Startdrehzahl umso größer gewählt wird, je größer das Turbulenzmaß ist.

14. Verfahren nach einem der Ansprüche 11 bis 13,
**dadurch gekennzeichnet, dass**

- der Startdrehzahl ein Startrotorblatteinstellwinkel zugeordnet ist und insbesondere
- der Startrotorblatteinstellwinkel umso größer gewählt wird, je größer die Startdrehzahl gewählt wird.

15. Verfahren nach einem der Ansprüche 11 bis 14,
**dadurch gekennzeichnet, dass**

- eine Windenergieanlage nach einem der Ansprüche 1 bis 10 verwendet wird.

**Claims**

1. A wind turbine (100), comprising

   - a tower (102),
   - an aerodynamic rotor (106), wherein the aerodynamic rotor (106)
   - can be operated at a variable rotor speed (n) and
   - has a plurality of rotor blades (108), each having an adjustable rotor blade setting angle,
   - a generator (Gen) for generating an electrical output power, wherein
   - an operating characteristic curve is prespecified for operating the wind turbine (100), which operating characteristic curve indicates a relationship between the rotor speed (n) and the output power (P), and
   - a controller is provided, which controller sets the output power (P) in accordance with the operating characteristic curve depending on the rotor speed (n), wherein
   - the operating characteristic curve has a starting rotation speed to which the rotor speed increases as soon as the wind turbine starts when a sufficient wind speed is reached, and wherein the starting rotation speed is defined
   - depending on a tower natural frequency of the wind turbine and/or
   - depending on a detected turbulence measure of the prevailing wind.

2. The wind turbine as claimed in claim 1, **characterized in that**

   - a turbulence intensity is considered to be a turbulence measure.

3. The wind turbine as claimed in claim 1 or 2, **characterized in that**

   - a starting output power is associated with the starting rotation speed by means of the operating characteristic curve and
   - the starting output power is initially set when the wind turbine is started, until the wind speed increases further.

4. The wind turbine as claimed in one of the preceding claims, **characterized in that**

   - a starting wind speed or a starting torque is defined and,
   - when the wind speed increases to the starting wind speed or when a rotor torque increases to the starting torque,
   the wind turbine starts,
   - increases to the starting rotation speed by the rotor speed and
   - sets the starting output power.

5. The wind turbine as claimed in one of the preceding claims, **characterized in that**

   - the starting rotation speed is defined by way of the operating characteristic curve being defined or being selected from a plurality of predetermined operating characteristic curves.

6. The wind turbine as claimed in one of the preceding claims, **characterized in that**

   - the turbulence measure is a measure of how turbulent the prevailing wind is, wherein the more turbulent the wind, the greater the turbulence measure, and
   - the greater the turbulence measure, the greater the starting rotation speed is selected to be.

7. The wind turbine as claimed in one of the preceding claims, **characterized in that**

   - the starting rotation speed is selected such that it lies above a rotor speed which excites the tower natural frequency, in particular **in that**
   - the starting rotation speed is selected such that its associated blade pass frequency lies above the tower natural frequency, in particular such that its blade pass frequency lies at least 5% above the tower natural frequency, in particular in the range of from 5% to 25%.

8. The wind turbine as claimed in one of the preceding claims, **characterized in that**

   - a starting rotor blade setting angle is associated with the starting rotation speed, and in particular
   - the greater the starting rotation speed is selected to be, the greater the starting rotor blade setting angle is selected to be.

9. The wind turbine as claimed in one of the preceding claims, **characterized in that**

   - a tip-speed ratio which is established at the starting rotation speed is selected depending on the starting rotation speed and/or depending on a starting rotor blade setting angle, and in particular
   - the greater the starting rotation speed is selected to be and/or the greater the starting rotor blade setting angle is selected to be, the greater the tip-speed ratio is selected to be.

10. The wind turbine as claimed in one of the preceding claims, **characterized in that**

    - the operating rotation speed and/or operating characteristic curve during operation and/or in a coasting mode is adjusted depending on the turbulence measure in order to set the starting rotation speed in this way, and/or
    - the turbulence measure is detected from an operating behavior of the wind turbine.

11. A method for controlling a wind turbine (100) which has

    - a tower (102) and
    - an aerodynamic rotor (106), wherein the aerodynamic rotor (106)
    - can be operated at a variable rotor speed (n) and
    - has a plurality of rotor blades (108), each having an adjustable rotor blade setting angle, and the wind turbine has
    - a generator (Gen) for generating an electrical output power, comprising the steps of
    - operating the wind turbine (100) using a prespecified operating characteristic curve which indicates a relationship between the rotor speed (n) and the output power (P), and
    - setting the output power (P) in accordance with the operating characteristic curve depending on the rotor speed (n), wherein
    - the operating characteristic curve has a starting rotation speed to which the rotor speed increases as soon as the wind turbine starts when a sufficient wind speed is reached, and wherein the starting rotation speed is defined
    - depending on a tower natural frequency of the wind turbine and/or
    - depending on a detected turbulence measure of the prevailing wind, in particular depending on a turbulence intensity.

12. The method as claimed in claim 11, **characterized in that**

    - a starting wind speed is defined and,
    - when the wind speed increases to the starting wind speed,
    the wind turbine is started,
    - the rotor speed is increased to the starting rotation speed and
    - the starting output power is set.

13. The method as claimed in claim 11 or 12, **characterized in that**

    - the turbulence measure is a measure of how turbulent the prevailing wind is, wherein the more turbulent the wind is, the greater the turbulence measure is, and
    - the greater the turbulence measure is, the greater the starting rotation speed is selected to be.

14. The method as claimed in one of claims 11 to 13, **characterized in that**

    - a starting rotor blade setting angle is associated with the starting rotation speed, and in particular
    - the greater the starting rotation speed is selected to be, the greater the starting rotor blade setting angle is selected to be.

15. The method as claimed in one of claims 11 to 14, **characterized in that**

    - a wind turbine as claimed in one of claims 1 to 10 is used.

## Revendications

1. Eolienne (100) avec

    - une tour (102),
    - un rotor (106) aérodynamique, dans laquelle le rotor (106) aérodynamique
    - peut fonctionner avec une vitesse de rotation de rotor (n) variable et
    - présente plusieurs pales de rotor (108) respectivement avec un angle de réglage de pale de rotor ajustable,
    - un générateur (Gen) pour générer une puissance de sortie électrique,
    dans laquelle
    - est prévue, pour faire fonctionner l'éolienne (100), une caractéristique de fonctionnement, qui indique un lien entre la vitesse de rotation de rotor (n) et la puissance de sortie (P), et
    - une commande est prévue, qui règle la puissance de sortie (P) conformément à la caractéristique de fonctionnement en fonction de la vitesse de rotation de rotor (n), dans laquelle
    - la caractéristique de fonctionnement présente une vitesse de rotation de démarrage, sur laquelle la vitesse de rotation de rotor augmente dès que l'éolienne démarre en présence d'une vitesse de vent suffisante, et dans laquelle la vitesse de rotation de démarrage est fixée
    - en fonction d'une fréquence propre de tour de l'éolienne et/ou
    - en fonction d'une mesure de turbulence détectée du vent prédominant.

**2.** Eolienne selon la revendication 1, **caractérisée en ce que**

     - une intensité de turbulence est observée en tant que mesure de turbulence.

**3.** Eolienne selon la revendication 1 ou 2, **caractérisée en ce que**

     - une puissance de sortie de démarrage est associée à la vitesse de rotation de démarrage par l'intermédiaire de la caractéristique de fonctionnement, et
     - d'abord la puissance de sortie de démarrage est réglée lors du démarrage de l'éolienne jusqu'à ce que la vitesse du vent continue à augmenter.

**4.** Eolienne selon l'une quelconque des revendications précédentes, **caractérisée en ce que**

     - une vitesse de vent de démarrage ou un couple de rotation de démarrage est fixée ou fixé, et
     - l'éolienne est démarrée lors de l'augmentation de la vitesse de vent sur la vitesse du vent de démarrage ou lors de l'augmentation d'un couple de rotation de rotor sur le couple de rotation de démarrage,
     - la vitesse de rotation de rotor est augmentée sur la vitesse de rotation de démarrage et
     - la puissance de sortie de démarrage est réglée.

**5.** Eolienne selon l'une quelconque des revendications précédentes, **caractérisée en ce que**

     - la vitesse de rotation de démarrage est fixée **en ce que** la caractéristique de fonctionnement est fixée ou est choisie parmi plusieurs caractéristiques de fonctionnement prédéfinies.

**6.** Eolienne selon l'une quelconque des revendications précédentes, **caractérisée en ce que**

     - la mesure de turbulence est une mesure de la turbulence du vent prédominant, dans laquelle la mesure de turbulence est d'autant plus importante que le vent est turbulent, et
     - la vitesse de rotation de démarrage est choisie d'autant plus importante que la mesure de turbulence est importante.

**7.** Eolienne selon l'une quelconque des revendications précédentes, **caractérisée en ce que**

     - la vitesse de rotation de démarrage est choisie de telle sorte qu'elle est supérieure à la vitesse de rotation de rotor, qui excite la fréquence propre de tour, en particulier que
     - la vitesse de rotation de démarrage est choisie de telle sorte que sa fréquence de passage de pale associée est supérieure à la fréquence propre de tour, en particulier de telle sorte que sa fréquence de passage de pale est au moins 5 % supérieure à la fréquence propre de tour, en particulier se situe dans la plage de 5 % à 25 %.

**8.** Eolienne selon l'une quelconque des revendications précédentes, **caractérisée en ce que**

     - un angle de réglage de pale de rotor de démarrage est associé à la vitesse de rotation de démarrage, et en particulier
     - l'angle de réglage de pale de rotor de démarrage choisi est d'autant plus important que la vitesse de rotation de démarrage choisie est importante.

**9.** Eolienne selon l'une quelconque des revendications précédentes, **caractérisée en ce que**

     - une vitesse de rotation en bout de pale se réglant dans le cas de la vitesse de rotation de démarrage est choisie en fonction de la vitesse de rotation de démarrage et/ou en fonction d'un angle de réglage de pale de rotor de démarrage, et en particulier
     - la vitesse de rotation en bout de pale choisie est d'autant plus importante que la vitesse de rotation de démarrage choisie est importante et/ou que l'angle de réglage de pale de rotor de démarrage choisi est important.

**10.** Eolienne selon l'une quelconque des revendications précédentes, **caractérisée en ce que**

     - la vitesse de rotation de fonctionnement et/ou la caractéristique de fonctionnement sont adaptées lors du fonctionnement en cours et/ou dans un mode vrille en fonction de la mesure de turbulence pour régler ainsi la vitesse de rotation de démarrage, et/ou
     - la mesure de turbulence est détectée à partir d'un comportement de fonctionnement de l'éolienne.

**11.** Procédé pour commander une éolienne (100), qui présente

     - une tour (102) et

- un rotor (106) aérodynamique, dans lequel le rotor (106) aérodynamique
- peut fonctionner avec une vitesse de rotation de rotor (n) variable et
- présente plusieurs pales de rotor (108) respectivement avec un angle de réglage de pale de rotor ajustable, et l'éolienne
- présente un générateur (Gen) pour générer une puissance de sortie électrique, comprenant les étapes
- de fonctionnement de l'éolienne (100) en utilisant une caractéristique de fonctionnement prédéfinie, qui indique un lien entre la vitesse de rotation de rotor (n) et la puissance de sortie (P), et
- de réglage de la puissance de sortie (P) conformément à la caractéristique de fonctionnement en fonction de la vitesse de rotation de rotor (n), dans lequel
- la caractéristique de fonctionnement présente une vitesse de rotation de démarrage, sur laquelle la vitesse de rotation de rotor augmente dès que l'éolienne démarre à une vitesse de vent suffisante, et dans lequel la vitesse de rotation de démarrage est fixée
- en fonction d'une fréquence propre de tour de l'éolienne et/ou
- en fonction d'une mesure de turbulence détectée du vent prédominant, en particulier en fonction d'une intensité de turbulence.

**12.** Procédé selon la revendication 11, **caractérisé en ce que**

- une vitesse de vent de démarrage est fixée, et
- l'éolienne est démarrée lors de l'augmentation de la vitesse du vent sur la vitesse du vent de démarrage,
- la vitesse de rotation de rotor est augmentée sur la vitesse de rotation de démarrage, et
- la puissance de sortie de démarrage est réglée.

**13.** Procédé selon la revendication 11 ou 12, **caractérisé en ce que**

- la mesure de turbulence est une mesure pour la turbulence du vent prédominant, dans lequel la mesure de turbulence est d'autant plus importante que le vent est turbulent, et
- la vitesse de rotation de démarrage choisie est d'autant plus importante que la mesure de turbulence est importante.

**14.** Procédé selon l'une quelconque des revendications 11 à 13, **caractérisé en ce que**

- un angle de réglage de rotor de démarrage est associé à la vitesse de rotation de démarrage, et en particulier
- l'angle de réglage de pale de rotor de stator choisi est d'autant plus important que la vitesse de rotation de démarrage choisie est importante.

**15.** Procédé selon l'une quelconque des revendications 11 à 14, **caractérisé en ce que**

- une éolienne selon l'une quelconque des revendications 1 à 10 est utilisée.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090292397 A1
- US 20140327243 A1
- EP 2113659 A2
- WO 200177524 A1